# FASCICULE DE BREVET EUROPEEN

(11) **EP 3 726 154 B1**
(45) Date de publication et mention de la délivrance du brevet: **12.10.2022**
(21) Numéro de dépôt: 19169453.8
(22) Date de dépôt: 16.04.2019
(51) Int. Cl.: F24F 5/00, F25J 1/00

(54) **PROCÉDÉ ET INSTALLATION DE REFROIDISSEMENT D'EAU DE CLIMATISATION PAR ÉCHANGE THERMIQUE AVEC DES LIQUIDES CRYOGÉNIQUES**
VERFAHREN UND ANLAGE ZUM KÜHLEN VON KLIMAANLAGENWASSER DURCH WÄRMEAUSTAUSCH MIT KRYOGENEN FLÜSSIGKEITEN
METHOD AND INSTALLATION FOR COOLING AIR-CONDITIONING WATER BY HEAT EXCHANGE WITH CRYOGENIC LIQUID

(43) Date de publication de la demande: 21.10.2020
(73) Titulaire: Air Liquide Medical S.A., 4020 Liège (BE); L'AIR LIQUIDE, SOCIETE ANONYME POUR L'ETUDE ET L'EXPLOITATION DES PROCEDES GEORGES CLAUDE, 75007 Paris (FR)
(72) Inventeur: PLETINCX, Ben, 1130 Brussels (BE)
(74) Mandataire: Air Liquide

(56) Documents cités:
- EP-A2- 0 757 212
- CA-A1- 2 472 752
- CN-A- 108 344 089
- KR-A- 20160 086 532
- US-A- 3 385 073
- US-A- 3 662 561
- US-A- 5 960 635

## Description

L'invention concerne un procédé et une installation permettant de refroidir de l'eau de climatisation, i.e. de refroidissement, servant à la climatisation d'un bâtiment hospitalier, c'est-à-dire d'un hôpital, d'une clinique, d'une structure de soins ou analogue.

De nombreux bâtiments, en particulier les bâtiments hospitaliers, sont dotés d'un système de climatisation servant à refroidir, i.e. climatiser, les différentes pièces ou autres locaux de ces bâtiments, telles les salles de soins, d'opération, les chambres, l'accueil, les salles d'attente, les couloirs etc...

On utilise également de l'eau glacée pour la régulation de l'hygrométrie car en refroidissant l'air, on le déshumidifie.

Un système de climatisation met généralement en œuvre un appareil de climatisation ou climatiseur central servant à refroidir et distribuer un fluide de refroidissement, typiquement de l'eau de refroidissement, telle de l'eau glycolée, au sein du bâtiment à climatiser et ce, via un réseau de canalisations fonctionnant en circuit fermé, c'est-à-dire en boucle. Le fluide de refroidissement sert à refroidir les chambres et les environnements techniques par le biais de plafonds froids et d'échangeurs thermiques froids dans les centrales de traitement d'air (CTA).

Le document CN 108 344 089 A montre un procédé pour refroidir de l'eau de climatisation servant à climatiser un bâtiment hospitalier, comprenant les étapes de :
- amener de l'oxygène sous forme liquide,
- amener de l'eau à refroidir, et
- opérer un échange thermique entre l'eau de climatisation à refroidir et l'oxygène sous forme liquide de manière à refroidir l'eau de climatisation et à vaporiser l'oxygène et obtenir de l'oxygène sous forme gazeuse.

Ce document montre aussi: une installation de refroidissement de l'eau de climatisation pour climatiser au moins une partie d'un bâtiment hospitalier, comprenant :
- une première canalisation d'eau pour de l'eau de climatisation à refroidir, f
- une canalisation d'oxygène reliée à une source d'oxygène liquide fournissant de l'oxygène sous forme liquide,
- des moyens échangeurs thermiques agencés de manière à opérer un échange thermique entre l'eau de climatisation à refroidir amenée par la première canalisation d'eau et l'oxygène liquide amené par ladite canalisation d'oxygène de manière à refroidir l'eau de climatisation et à vaporiser l'oxygène liquide et obtenir de l'oxygène sous forme gazeuse.

Or, les climatiseurs sont dotés de compresseurs voraces en électricité et ont un rendement maximal (COP) de 3 sur 1, c'est-à-dire qu'ils requièrent une grande quantité d'électricité pour refroidir le fluide de refroidissement, préalablement à son renvoi dans le réseau de canalisations distribuant le fluide.

Le problème dès lors est de pouvoir réduire la consommation en énergie, c'est-à-dire en électricité, d'un système de climatisation agencé dans un bâtiment hospitalier.

La solution concerne alors un procédé tel que décrit dans la revendication 1.

Dans le cadre de la présente invention, les abréviations et définitions suivantes sont utilisées :
- LIN désigne de l'azote sous forme liquide,
- LOX désigne de l'oxygène sous forme liquide,
- GAN désigne de l'azote sous forme gazeuse,
- GOX désigne de l'oxygène sous forme gazeuse,
- « eau à refroidir » désigne l'eau avant échange thermique avec le LIN et le LOX,
- « eau froide » ou « eau refroidie » désigne l'eau après son refroidissement par échange thermique avec le LIN et le LOX,
- « air médical » désigne un mélange gazeux formé au moins d'azote et d'oxygène (i.e. N₂/O₂),
- « eau de climatisation » ou « eau de refroidissement » désigne l'eau du réseau de climatisation, par exemple de l'eau glycolée ou analogue.

Selon le mode de réalisation considéré, le procédé de l'invention peut comprendre l'une ou plusieurs des caractéristiques suivantes :
- l'azote sous forme liquide (LIN) est amené par une (ou plusieurs) canalisation d'azote.
- l'oxygène sous forme liquide (LOX) est amené par une (ou plusieurs) canalisation d'oxygène.
- l'eau de climatisation est amenée par une (ou plusieurs) première canalisation d'eau de climatisation.
- l'azote sous forme liquide (LIN) provient d'une source d'azote liquide.
- l'oxygène sous forme liquide (LOX) provient d'une source d'oxygène liquide.
- l'eau de climatisation à refroidir est l'eau de refroidissement servant à climatiser au moins une partie du bâtiment hospitalier, en particulier au moins une partie des salles d'opération, des salles de soins, des chambres, des couloirs......
- l'eau de climatisation est l'eau glycolée, c'est-à-dire additionnée de glycol.
- l'eau de climatisation est véhiculé au sein d'un système de climatisation comprenant des canalisations d'eau, une ou des pompes de circulation, un ou des compresseurs et au moins une chambre de dilatation servant à refroidir mécaniquement l'eau de climatisation.
- le système de climatisation est en circuit fermé, c'est-à-dire fonctionne en boucle.
- la première canalisation d'eau de climatisation est reliée au système de climatisation dudit bâtiment, c'est-à-dire que l'eau à refroidir provient du système de climatisation.
- à l'étape d), l'eau de climatisation est refroidie à une température inférieure à 12°C, de préférence inférieure à 10°C, de préférence encore inférieure à 8°C, typiquement entre 2 et 6°C.
- la source d'azote liquide est un réservoir de stockage d'azote liquide, de préférence ayant une capacité d'au moins 5000 litres.
- la source d'oxygène liquide est un réservoir de stockage d'oxygène liquide, de préférence ayant une capacité d'au moins 3000 litres.
- la source d'azote liquide et/ou la source d'oxygène liquide sont agencées à l'extérieur du bâtiment hospitalier, de préférence à proximité immédiate du bâtiment, par exemple à côté du bâtiment.
- à l'étape d), on opère un échange thermique à contre-courant, c'est-à-dire que l'eau circule dans un sens opposé au sens de circulation de l'azote et de l'oxygène au sein des canalisations les véhiculant.
- à l'étape d), on opère un échange thermique au sein d'au moins un échangeur thermique.
- à l'étape d), on opère un échange thermique par transfert de calories de l'eau à refroidir vers le LIN et le LOX de manière à réchauffer le LIN et le LOX et à former du GAN et du GOX.
- à l'étape d), on opère un échange thermique par transfert de frigories du LIN et du LOX vers l'eau à refroidir de manière à refroidir l'eau, c'est-à-dire faire baisser sa température.
- avant refroidissement, l'eau à refroidir véhiculée par la première canalisation d'eau est à une température d'au moins 6°C, de préférence d'au moins 8°C, de préférence encore d'au moins 10°C, typiquement 8 et 12 °C.
- on opère par ailleurs un mélange d'au moins une partie de l'oxygène gazeux (GOX) obtenu à l'étape d) avec de l'azote gazeux (GAN) obtenu à l'étape d) de manière à produire de l'air médical, i.e. un mélange gazeux N₂/O₂.
- on opère le mélange d'oxygène gazeux et d'azote gazeux obtenus à l'étape d) servant à produire de l'air médical au sein d'un (ou plusieurs) mélangeur de gaz.
- le mélangeur de gaz est en communication fluidique avec (au moins) une canalisation d'air médical servant à récupérer et convoyer l'air médical obtenu.
- la canalisation d'air médical est reliée fluidiquement au réseau d'air médical du bâtiment hospitalier de manière à pouvoir alimenter le réseau d'air médical du bâtiment hospitalier avec l'air médical.
- on alimente le réseau d'air médical du bâtiment hospitalier avec l'air médical produit par mélange d'oxygène gazeux et d'azote gazeux obtenus à l'étape d).
- on fournit au moins une partie de l'azote liquide (LIN) provenant de la source d'azote liquide à un vaporiseur d'azote additionnel de manière à produire de l'azote gazeux (GAN) par vaporisation du LIN.
- on fournit au moins une partie de l'oxygène liquide (LOX) provenant de la source d'oxygène liquide à un vaporiseur d'oxygène additionnel de manière à produire de l'oxygène gazeux (GOX) par vaporisation du LOX.
- on récupère l'azote gazeux et l'oxygène gazeux produits par le vaporiseur d'azote additionnel et par le vaporiseur d'oxygène additionnel, et on alimente le mélangeur de gaz avec au moins une partie de l'azote gazeux et l'oxygène gazeux ainsi récupérés de manière à produire de l'air médical au sein dudit mélangeur de gaz, c'est-à-dire un mélange d'azote gazeux et d'oxygène gazeux.
- on récupère par ailleurs au moins une partie de l'oxygène gazeux produit par le vaporiseur d'oxygène additionnel pour alimenter un réseau de canalisations d'oxygène du bâtiment hospitalier de manière à fournir de l'oxygène gazeux aux différentes pièces ou salles du bâtiment où de l'oxygène est susceptible d'être utilisé, notamment les salles de soins, d'opération, les chambres de patients....
- on récupère au moins une partie de l'oxygène gazeux produit par le vaporiseur d'oxygène additionnel, au sein d'une canalisation d'oxygène supplémentaire reliée fluidiquement au réseau de canalisations d'oxygène du bâtiment hospitalier.

Par ailleurs, l'invention concerne aussi une installation de refroidissement de l'eau de climatisation servant à climatiser au moins une partie d'un bâtiment hospitalier selon la revendication 8.

Selon le mode de réalisation considéré, l'installation de refroidissement de l'invention peut comprendre l'une ou plusieurs des caractéristiques suivantes :
- les moyens échangeurs thermiques comprennent un ou plusieurs échangeurs thermiques, de préférence de type à contre-courant.
- la source d'azote liquide est un réservoir de stockage d'azote liquide et/ou la source d'oxygène liquide est un réservoir de stockage d'oxygène liquide.
- la source d'azote liquide et/ou la source d'oxygène liquide sont agencées à l'extérieur du bâtiment.
- elle comprend (au moins) une seconde canalisation d'eau refroidie reliée fluidiquement aux moyens échangeurs thermiques et au système de climatisation du bâtiment distribuant l'eau refroidie au réseau de climatisation du bâtiment.
- la seconde canalisation d'eau refroidie achemine l'eau « froide » provenant des moyens échangeurs thermiques jusqu'au système de climatisation.
- le système de climatisation et le réseau de climatisation sont agencés dans le bâtiment de manière à permettre de refroidir au moins une partie des salles d'opération, des salles de soins, des chambres, des couloirs, des zones techniques, la morgue et les appareils de déshumidification.
- le réseau de climatisation est un circuit fermé.
- le système de climatisation comprend des canalisations d'eau, i.e. un réseau de climatisation, une ou des pompes de circulation, un ou des compresseurs et au moins une chambre de dilatation.
- le système de climatisation est configuré pour refroidir mécaniquement l'eau de climatisation.
- elle comprend en outre un vaporisateur d'azote et un vaporiseur d'oxygène alimentés, respectivement, par la source de LIN et la source d'oxygène, de préférence via des lignes d'amenée de LIN et de LOX, respectivement, reliant fluidiquement les sources de LIN 10 et de LOX 20 auxdits vaporiseurs de gaz.
- le vaporiseur d'azote est conçu pour vaporiser le LIN et produire de l'azote gazeux et le vaporiseur d'oxygène est conçu pour vaporiser le LOX et produire de l'oxygène gazeux.
- une ligne de fourniture d'azote gazeux et une ligne de fourniture d'oxygène gazeux relient fluidiquement les vaporiseurs d'azote et d'oxygène au mélangeur de gaz de manière à alimenter ledit mélangeur de gaz avec de l'azote gazeux et de l'oxygène gazeux produits dans les vaporiseurs d'azote et d'oxygène.
- une ligne de dérivation relie fluidiquement le vaporiseur d'oxygène à un réseau de canalisations d'oxygène du bâtiment hospitalier de manière à fournir de l'oxygène gazeux aux différentes pièces ou salles du bâtiment où de l'oxygène est susceptible d'être utilisé, notamment les salles de soins, d'opération, les chambres de patients....

L'invention va maintenant être mieux comprise grâce à la description détaillée suivante, faite à titre illustratif mais non limitatif, en référence aux figures annexées parmi lesquelles :
- la Figure 1 schématise une installation selon l'invention et
- la Figure 2 illustre un échange thermique à contre-courant.

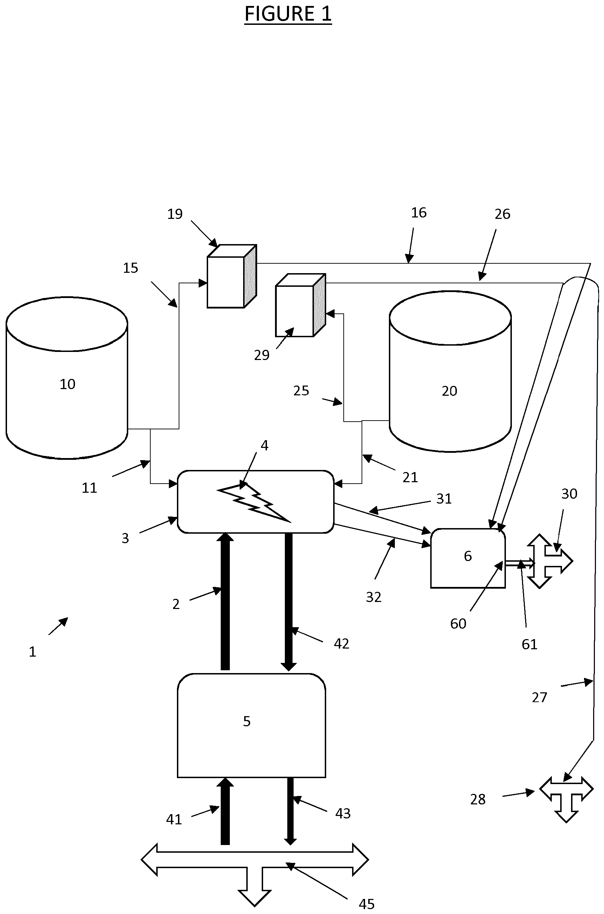

La Figure 1 schématise une installation 1 permettant de refroidir l'eau de climatisation, i.e. de refroidissement, servant à climatiser tout ou une partie d'un bâtiment hospitalier, c'est-à-dire des salles d'opération, des salles de soins, des chambres, des couloirs, des locaux techniques... d'un hôpital, d'une clinique, d'une structure de soins ou analogue, via un réseau de climatisation 45 relié fluidiquement un système de climatisation 5.

Cette installation 1 comprend une première canalisation d'eau 2 véhiculant de l'eau de climatisation à refroidir, typiquement de l'eau glycolée, et alimentée en eau par un système de climatisation 5 comprenant des pompes de circulation et des compresseurs et au moins une chambre de dilatation afin de refroidir mécaniquement l'eau de climatisation, lequel est raccordé fluidiquement au réseau de climatisation 45 du bâtiment, via une ligne de retour d'eau 41 et une ligne de fourniture d'eau refroidie 43, i.e. des conduites. Le réseau de climatisation 45 fonctionne en circuit fermé (en boucle), c'est-à-dire que l'eau « froide » (env. 4°C) est envoyée au réseau de climatisation 45 du bâtiment par la ligne de fourniture d'eau 43 et l'eau « réchauffée » (env. 8° à 12°C) retourne ensuite vers le système de climatisation 5 par la ligne de retour d'eau 41.

La première canalisation d'eau 2 amène l'eau à des échangeurs thermiques 3, par exemple un ou plusieurs échangeurs thermiques permettant de réaliser des échanges thermiques par transfert de calories/frigories (i.e. calories négatives) entre l'eau, et l'azote et l'oxygène sous forme liquide.

De l'azote sous forme liquide (LIN) provenant d'une source d'azote liquide 10, tel un réservoir d'azote liquide, e.g. d'au moins 5000 L, situé à l'extérieur du bâtiment, est acheminé via une canalisation d'azote liquide 11 jusqu'aux moyens échangeurs thermiques 3. De manière analogue, de l'oxygène sous forme liquide (LOX) provenant d'une source d'oxygène liquide 20, tel un réservoir d'oxygène liquide, e.g. d'au moins 3000 L, aussi situé à l'extérieur du bâtiment, est acheminé via une canalisation d'oxygène liquide 21 jusqu'aux moyens échangeurs thermiques 3.

Les moyens échangeurs thermiques 3 sont conçus pour opérer un échange thermique (en 4) entre l'eau à refroidir amenée par la première canalisation d'eau 2 et le LOX et le LIN amenés par lesdites canalisations d'azote 11 et d'oxygène 21 de manière à refroidir l'eau amenée par la première canalisation d'eau 2 et, par ailleurs, à réchauffer le LOX et le LIN et ainsi les vaporiser pour obtenir de l'oxygène et de l'azote sous forme gazeuse, i.e. GOX et GAN.

Typiquement, avant refroidissement, l'eau de climatisation à refroidir est à une température d'au moins 8 à 10°C, alors qu'après refroidissement, l'eau de climatisation refroidie est à une température inférieure à celle de l'eau à refroidir, c'est-à-dire à une température inférieure à 10°C, en général inférieure ou égale à 8 °C, typiquement entre 2 et 6°C.

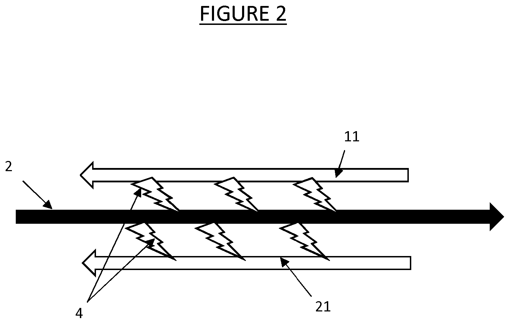

Avantageusement, l'échange thermique est opéré à contre-courant dans les moyens échangeurs thermiques 3, comme illustré en Figure 2, par transfert de calories/frigories entre la canalisation de LIN 11, la canalisation de LOX 21 et, par ailleurs, la canalisation d'eau à refroidir 2. Le sens de circulation des flux de LIN, LOX et d'eau est donné par le sens des flèches. Comme on le voit, l'eau circule dans un sens opposé au sens de circulation de l'azote et de l'oxygène au sein des canalisations 2, 11, 21 les véhiculant.

Une fois refroidie au sein des moyens échangeurs thermiques 3, typiquement un échangeur de chaleur, l'eau « froide », c'est-à-dire typiquement à une température de l'ordre de 4°à 6°C, est renvoyée, via une seconde canalisation d'eau 42, vers les moyens échangeurs thermiques 3 où l'eau refroidie par l'échangeur 3 est mélangée à de l'eau refroidie directement dans le système de climatisation 5 limitant, de ce fait, la consommation énergétique de l'ensemble de climatisation 5.

Par ailleurs, on récupère le GOX et le GAN générés par vaporisation au sein des moyens échangeurs thermiques 3 et ces gaz sont convoyés jusqu'à un mélangeur de gaz 6 via des conduites de gaz 31, 32 reliant fluidiquement les moyens échangeurs thermiques 3 au mélangeur de gaz 6, comme illustré en Figure 1.

On réalise alors un mélange du GOX et GAN au sein du mélangeur de gaz 6 de manière à produire de l'air médical, c'est-à-dire un mélange gazeux formé d'azote et d'oxygène, i.e. un mélange N₂/O₂.

Le mélangeur de gaz 6 comprend par ailleurs une sortie d'air en communication fluidique avec (au moins) une canalisation d'air médical 61 servant à récupérer l'air médical produit dans le mélangeur de gaz 6. Cette canalisation d'air médical 61 est reliée fluidiquement au réseau 30 d'air médical du bâtiment hospitalier de manière à fournir audit réseau 30 d'air, le mélange N₂/O₂ produit au sein du mélangeur de gaz 6.

Par ailleurs, on voit sur la Figure 1 que l'installation 1 comprend aussi deux vaporiseurs atmosphériques de gaz 19, 29 additionnels de secours en cas de défaillance des moyens échangeurs thermiques 3 ou s'il y a un problème dans l'approvisionnement et/ou avec la canalisation d'eau à refroidir 2, 42.

Plus précisément, il s'agit préférentiellement d'un vaporiseur d'azote 19 atmosphérique additionnel et un vaporiseur d'oxygène 29 additionnel en « back-up » alimentés, respectivement, par la source de LIN 10 et la source d'oxygène 20, via des lignes d'amenée de LIN 15 et de LOX 25, respectivement, reliant fluidiquement les sources de LIN 10 et de LOX 20 auxdits vaporiseurs de gaz additionnels 19, 29.

Le vaporiseur d'azote 19 permet de vaporiser le LIN pour produire de l'azote gazeux ou GAN et, de manière analogue, le vaporiseur d'oxygène 29 permet de vaporiser le LOX pour produire de d'oxygène gazeux ou GOX par l'échange avec la température ambiante atmosphérique. Le GAN et le GOX ainsi obtenus sont ensuite acheminés sous forme gazeuse, via des lignes de GAN 16 et de GOX 26, vers le mélangeur 6 de gaz pour produire de l'air médical par mélange d'azote et d'oxygène gazeux qui peut ensuite alimenter le réseau d'air 30 du bâtiment hospitalier, comme déjà expliqué ci-dessus.

L'oxygène gazeux vaporisé peut aussi alimenter directement, via une ligne de dérivation 27 par exemple, un réseau de canalisations d'oxygène 28 du bâtiment hospitalier servant à acheminer de l'oxygène vers différentes pièces ou salles du bâtiment où de l'oxygène est susceptible d'être utilisé, notamment les salles de soins, d'opération, les chambres de patients....

Bien entendu, l'installation 1 de l'invention comprend aussi des moyens à vannes (non montrées), telles des électrovannes, ou d'autres éléments de contrôle de flux (non montrés), tels des clapets anti-retour ou autres, agencés sur les canalisations de l'installation 1 de manière à réguler ou contrôler les flux d'oxygène, d'azote, d'air et d'eau circulant dans lesdites canalisations de l'installation 1 et d'activer, en cas de besoin, les dites by-pass par le réseau de back-up c'est-à-dire la ligne 15, 25 afin de garantir la continuité d'approvisionnement du GAN et de l'air médical en sortie du moyen d'échangeur 6.

Une unité de pilotage (non montrée) permet de contrôler le fonctionnement de l'installation 1 de l'invention, notamment l'ouverture ou la fermeture des moyens à vannes ou autres.

L'installation 1 de l'invention est alimentée électriquement par le réseau électrique ou autre.

Le procédé et l'installation de l'invention sont particulièrement efficaces pour refroidir l'eau de climatisation circulant dans le système de climatisation d'un bâtiment hospitalier, c'est-à-dire d'un hôpital, d'une clinique, d'une structure de soins ou analogue, et permettent de réaliser une réduction notable de la consommation électrique dudit système de climatisation du bâtiment hospitalier.

## Revendications

1. Procédé pour refroidir de l'eau de climatisation servant à climatiser un bâtiment hospitalier, comprenant les étapes de :
a) amener de l'azote sous forme liquide (LIN),
b) amener de l'oxygène sous forme liquide (LOX),
c) amener de l'eau de climatisation à refroidir, et
d) opérer un échange thermique (4) entre l'eau de climatisation à refroidir et l'azote sous forme liquide (LIN) et l'oxygène sous forme liquide (LOX) de manière à refroidir l'eau de climatisation et à vaporiser l'azote et l'oxygène et obtenir de l'azote sous forme gazeuse (GAN) et de l'oxygène sous forme gazeuse (GOX).

2. Procédé selon la revendication précédente, **caractérisé en ce que** :
- l'azote sous forme liquide (LIN) est amené par une canalisation d'azote (11),
- l'oxygène sous forme liquide (LOX) est amené par une canalisation d'oxygène (21),
- l'eau de climatisation est amenée par une première canalisation d'eau de climatisation (2), et
- à l'étape d), on opère un échange thermique (4) entre l'eau de climatisation véhiculée par la première canalisation d'eau de climatisation (2) et l'azote sous forme liquide (LIN) et l'oxygène sous forme liquide (LOX) véhiculés par la canalisation d'azote (11) et la canalisation d'oxygène (21).

3. Procédé selon la revendication 2, **caractérisé en ce que** la première canalisation d'eau (2) est reliée au système de climatisation (5) dudit bâtiment.

4. Procédé selon l'une des revendications précédentes, **caractérisé en ce qu'**à l'étape d), l'eau est refroidie à une température inférieure à 12°C, de préférence inférieure à 10°C, de préférence entre 2 et 6°C.

5. Procédé selon l'une des revendications précédentes, **caractérisé en ce que** l'eau de refroidissement est de l'eau glycolée.

6. Procédé selon l'une des revendications précédentes, **caractérisé en ce qu'**on opère un mélange d'au moins une partie de l'oxygène gazeux obtenu avec de l'azote gazeux obtenu de manière à produire de l'air médical.

7. Procédé selon l'une des revendications précédentes, **caractérisé en ce qu'**à l'étape d), on opère un échange thermique à contre-courant.

8. Installation (1) de refroidissement de l'eau de climatisation pour climatiser au moins une partie d'un bâtiment hospitalier, comprenant :
- une première canalisation d'eau (2) pour de l'eau de climatisation à refroidir,
- une canalisation d'azote (11) reliée à une source d'azote liquide (10) fournissant de l'azote sous forme liquide (LIN),
- une canalisation d'oxygène (21) reliée à une source d'oxygène liquide (20) fournissant de l'oxygène sous forme liquide (LOX),
- des moyens échangeurs thermiques (3) agencés de manière à opérer un échange thermique (4) entre l'eau de climatisation à refroidir amenée par la première canalisation d'eau (2) et l'oxygène liquide et l'azote liquide amenés par lesdites canalisation d'azote (11) et canalisation d'oxygène (21) de manière à refroidir l'eau de climatisation et à vaporiser l'oxygène liquide et l'azote liquide et obtenir de l'azote et de l'oxygène sous forme gazeuse.

9. Installation de refroidissement selon la revendication 8, **caractérisée en ce que** la source d'azote liquide (10) est un réservoir de stockage d'azote liquide et la source d'oxygène liquide (20) est un réservoir de stockage d'oxygène liquide.

10. Installation de refroidissement selon l'une des revendications 8 ou 9, **caractérisée en ce qu'**elle comprend une seconde canalisation d'eau refroidie (42) reliée fluidiquement aux moyens échangeurs thermiques (3) et à un système de climatisation (5) pour un bâtiment.

11. Installation de refroidissement selon l'une des revendications 8 à 10, **caractérisée en ce qu'**elle comprend un bâtiment hospitalier avec un réseau de climatisation (45) et le système de climatisation (5) est relié pour alimenter le réseau de climatisation (45) du bâtiment hospitalier avec de l'eau refroidie provenant des moyens échangeurs thermiques (3).

12. Installation de refroidissement selon l'une des revendications 8 à 11, **caractérisée en ce qu'**elle comprend en outre un vaporiseur atmosphérique d'azote (19) et un vaporiseur atmosphérique d'oxygène (29) reliés fluidiquement pour être alimentés, respectivement, par la source de LIN (10) et la source d'oxygène (20).

13. Installation de refroidissement selon à la revendication 12, **caractérisée en ce que** le vaporiseur d'azote (19) est conçu pour vaporiser le LIN et produire de l'azote gazeux et le vaporiseur d'oxygène (29) est conçu pour vaporiser le LOX et produire de l'oxygène gazeux.

14. Installation de refroidissement selon à la revendication 12, **caractérisée en ce qu'**une ligne de fourniture d'azote gazeux (16) et une ligne de fourniture d'oxygène gazeux (26) relient fluidiquement les vaporiseurs d'azote (19) et d'oxygène (29) au mélangeur de gaz (6).

15. Installation de refroidissement selon la revendication 12, **caractérisée en ce qu'**elle comprend un bâtiment hospitalier et une ligne de dérivation (27) relie fluidiquement le vaporiseur d'oxygène (29) à un réseau de canalisations d'oxygène (28) du bâtiment hospitalier.

## Patentansprüche

1. Verfahren zum Kühlen von Klimaanlagenwasser, das zum Klimatisieren eines Krankenhausgebäudes dient, das die folgenden Schritte umfasst:
a) das Zuführen von Stickstoff (LIN) in flüssiger Form,
a) das Zuführen von Sauerstoff (LOX) in flüssiger Form,
c) das Zuführen von zu kühlendem Klimaanlagenwasser und
d) das Durchführen eines Wärmeaustausches (4) zwischen dem zu kühlenden Klimaanlagenwasser und dem Stickstoff (LIN) in flüssiger Form und dem Sauerstoff (LOX) in flüssiger Form, um das Klimaanlagenwasser zu kühlen und den Stickstoff und den Sauerstoff zu verdampfen und Stickstoff (GAN) in Gasform und Sauerstoff (GOX) in Gasform zu erhalten.

2. Verfahren nach dem vorhergehenden Anspruch, **dadurch gekennzeichnet, dass**:
- der Stickstoff (LIN) in flüssiger Form durch eine Stickstoffleitung (11) zugeführt wird,
- der Sauerstoff (LOX) in flüssiger Form durch eine Sauerstoffleitung (21) zugeführt wird,
- das Klimaanlagenwasser durch eine erste Klimaanlagenwasserleitung (2) zugeführt wird und
- in Schritt d) ein Wärmeaustausch (4) zwischen dem von der ersten Klimaanlagenwasserleitung (2) beförderten Klimaanlagenwasser und dem Stickstoff (LIN) in flüssiger Form und dem Sauerstoff (LOX) in flüssiger Form erfolgt, die von der Stickstoffleitung (11) und der Sauerstoffleitung (21) befördert werden.

3. Verfahren nach Anspruch 2, **dadurch gekennzeichnet, dass** die erste Wasserleitung (2) mit der Klimaanlage (5) des Gebäudes verbunden ist.

4. Verfahren nach einem der vorhergehenden Ansprüche, **dadurch gekennzeichnet, dass** in Schritt d) das Wasser auf eine Temperatur unter 12 °C, vorzugsweise unter 10 °C, vorzugsweise zwischen 2 und 6 °C, gekühlt wird.

5. Verfahren nach einem der vorhergehenden Ansprüche, **dadurch gekennzeichnet, dass** es sich beim Kühlwasser um ein Glycol-Wasser-Gemisch handelt.

6. Verfahren nach einem der vorhergehenden Ansprüche, **dadurch gekennzeichnet, dass** ein Mischen zumindest eines Teils des erhaltenen gasförmigen Sauerstoffs mit dem erhaltenen gasförmigen Stickstoff durchgeführt wird, um medizinische Luft zu erzeugen.

7. Verfahren nach einem der vorhergehenden Ansprüche, **dadurch gekennzeichnet, dass** in Schritt d) ein Gegenstrom-Wärmeaustausch durchgeführt wird.

8. Anlage (1) zur Kühlung von Klimaanlagenwasser zum Klimatisieren mindestens eines Teils eines Krankenhausgebäudes, die Folgendes umfasst:
- eine erste Wasserleitung (2) für zu kühlendes Klimaanlagenwasser,
- eine Stickstoffleitung (11), die mit einer Quelle (10) für flüssigen Stickstoff verbunden ist, die Stickstoff (LIN) in flüssiger Form zuführt,
- eine Sauerstoffleitung (21), die mit einer Quelle (20) für flüssigen Sauerstoff verbunden ist, die Sauerstoff (LOX) in flüssiger Form zuführt,
- Wärmeaustauschermittel (3), die so angeordnet sind, dass ein Wärmeaustausch (4) zwischen dem zu kühlenden Klimaanlagenwasser, das von der ersten Wasserleitung (2) zugeführt wird, und dem flüssigen Sauerstoff und dem flüssigen Stickstoff, die von der Stickstoffleitung (11) und der Sauerstoffleitung (21) zugeführt werden, durchgeführt wird, um das Klimaanlagenwasser zu kühlen und den flüssigen Sauerstoff und den flüssigen Stickstoff zu verdampfen und Stickstoff und Sauerstoff in Gasform zu erhalten.

9. Kühlanlage nach Anspruch 8, **dadurch gekennzeichnet, dass** es sich bei der Quelle (10) für flüssigen Stickstoff um einen Vorratstank für flüssigen Stickstoff handelt und es sich bei der Quelle (20) für flüssigen Sauerstoff um einen Vorratstank für flüssigen Sauerstoff handelt.

10. Kühlanlage nach einem der Ansprüche 8 oder 9, **dadurch gekennzeichnet, dass** sie eine zweite Leitung (42) für gekühltes Wasser umfasst, die mit Wärmeaustauschermitteln (3) und einer Klimaanlage (5) für ein Gebäude fluidisch gekoppelt ist.

11. Kühlanlage nach einem der Ansprüche 8 bis 10, **dadurch gekennzeichnet, dass** sie ein Krankenhausgebäude mit einem Klimatisierungsnetz (45) umfasst und die Klimaanlage (5) verbunden ist, um das Klimatisierungsnetz (45) des Krankenhausgebäudes mit dem von den Wärmeaustauschermitteln (3) stammenden gekühlten Wasser zu versorgen.

12. Kühlanlage nach einem der Ansprüche 8 bis 11, **dadurch gekennzeichnet, dass** sie weiterhin einen atmosphärischen Stickstoffverdampfer (19) bzw. einen atmosphärischen Sauerstoffverdampfer (29) umfasst, die so fluidisch gekoppelt sind, dass sie von der LIN-Quelle (10) bzw. der Sauerstoffquelle (20) versorgt werden.

13. Kühlanlage nach Anspruch 12, **dadurch gekennzeichnet, dass** der Stickstoffverdampfer (19) dazu ausgelegt ist, den LIN zu verdampfen und den gasförmigen Stickstoff zu erzeugen, und der Sauerstoffverdampfer (29) dazu ausgelegt ist, den LOX zu verdampfen und den gasförmigen Sauerstoff zu erzeugen.

14. Kühlanlage nach Anspruch 12, **dadurch gekennzeichnet, dass** eine Zufuhrleitung (16) für gasförmigen Stickstoff und eine Zufuhrleitung (26) für gasförmigen Sauerstoff den Stickstoffverdampfer (19) und den Sauerstoffverdampfer (29) mit dem Gasmischer (6) fluidisch koppeln.

15. Kühlanlage nach Anspruch 12, **dadurch gekennzeichnet, dass** sie ein Krankenhausgebäude und eine Abzweigleitung (27) umfasst, die den Sauerstoffverdampfer (29) mit einem Sauerstoff-Rohrleitungsnetz (28) des Krankenhausgebäudes fluidisch koppelt.

## Claims

1. Process for cooling air-conditioning water used to air-condition a hospital building, comprising the steps of:
a) providing nitrogen in liquid form (LIN),
b) providing oxygen in liquid form (LOX),
c) providing air-conditioning water to be cooled, and
d) performing a heat exchange (4) between the air-conditioning water to be cooled and the nitrogen in liquid form (LIN) and the oxygen in liquid form (LOX) so as to cool the air-conditioning water and to vaporize the nitrogen and the oxygen and obtain nitrogen in gaseous form (GAN) and/or oxygen in gaseous form (GOX).

2. Process according to the preceding claim, **characterized in that**:
- the nitrogen in liquid form (LIN) is provided by a nitrogen pipe (11),
- the oxygen in liquid form (LOX) is provided by an oxygen pipe (21),
- the air-conditioning water is provided by a first air-conditioning water pipe (2), and
- in step d), a heat exchange (4) is performed between the air-conditioning water conveyed by the first air-conditioning water pipe (2) and the nitrogen in liquid form (LIN) and the oxygen in liquid form (LOX) conveyed by the nitrogen pipe (11) and the oxygen pipe (21).

3. Process according to Claim 2, **characterized in that** the first water pipe (2) is connected to the air-conditioning system (5) of said building.

4. Process according to one of the preceding claims, **characterized in that**, in step d), the water is cooled to a temperature of less than 12°C, preferably less than 10°C, preferably between 2 and 6°C.

5. Process according to one of the preceding claims, **characterized in that** the cooling water is water mixed with glycol.

6. Process according to one of the preceding claims, **characterized in that** mixing of at least one portion of the gaseous oxygen obtained with the gaseous nitrogen obtained is performed so as to produce medical air.

7. Process according to one of the preceding claims, **characterized in that**, in step d), a counter-current heat exchange is performed.

8. Facility (1) for cooling the air-conditioning water for air-conditioning at least one portion of a hospital building, comprising:
- a first water pipe (2) for air-conditioning water to be cooled,
- a nitrogen pipe (11) connected to a liquid nitrogen source (10) supplying nitrogen in liquid form (LIN),
- an oxygen pipe (21) connected to a liquid oxygen source (20) supplying oxygen in liquid form (LOX),
- heat exchanger means (3) arranged so as to perform a heat exchange (4) between the air-conditioning water to be cooled, provided by the first water pipe (2), and the liquid oxygen and the liquid nitrogen provided by said nitrogen pipe (11) and oxygen pipe (21), so as to cool the air-conditioning water and to vaporize the liquid oxygen and the liquid nitrogen and to obtain nitrogen and oxygen in gaseous form.

9. Cooling facility according to Claim 8, **characterized in that** the liquid nitrogen source (10) is a liquid nitrogen storage tank and the liquid oxygen source (20) is a liquid oxygen storage tank.

10. Cooling facility according to either of Claims 8 and 9, **characterized in that** it comprises a second cooled water pipe (42) fluidically connected to the heat exchanger means (3) and to an air-conditioning system (5) for a building.

11. Cooling facility according to one of Claims 8 to 10, **characterized in that** it comprises a hospital building with an air-conditioning network (45) and the air-conditioning system (5) is connected so as to supply the air-conditioning network (45) of the hospital building with cooled water originating from the heat exchanger means (3).

12. Cooling facility according to one of Claims 8 to 11, **characterized in that** it also comprises an atmospheric nitrogen vaporizer (19) and an atmospheric oxygen vaporizer (29) which are fluidically connected so as to be supplied, respectively, by the LIN source (10) and the oxygen source (20).

13. Cooling facility according to Claim 12, **characterized in that** the nitrogen vaporizer (19) is designed to vaporize the LIN and to produce gaseous nitrogen and the oxygen vaporizer (29) is designed to vaporize the LOX and to produce gaseous oxygen.

14. Cooling facility according to Claim 12, **characterized in that** a gaseous nitrogen supply line (16) and a gaseous oxygen supply line (26) fluidically connect the nitrogen vaporizer (19) and the oxygen vaporizer (29) to the gas mixer (6).

15. Cooling facility according to Claim 12, **characterized in that** it comprises a hospital building, and a bypass line (27) fluidically connects the oxygen vaporizer (29) to an oxygen pipe network (28) of the hospital building.
